# EUROPÄISCHE PATENTANMELDUNG

(11) **EP 2 019 326 A2**
(43) Veröffentlichungstag der Anmeldung: **28.01.2009**
(21) Anmeldenummer: 08013315.0
(22) Anmeldetag: 24.07.2008
(51) Int. Cl.: G01S 13/95, G01S 13/86, G01W 1/00

(54) **Verfahren und Vorrichtung zum Erfassen von Parametern der Erdatmosphäre**

(30) Priorität: 27.07.2007 DE 102007035669
(71) Anmelder: SELEX Sistemi Integrati GmbH, 41470 Neuss (DE)
(72) Erfinder: Hannesen, Ronald, Dr., 40223 Düsseldorf (DE); Weipert, Andre, 41844 Wegberg (DE); Strümpel, Sebastian, 41470 Neuss (DE); Kammer, Axel, 53639 Königswinter (DE); Mähner, Klaus, 41466 Neuss (DE); Gekat, Frank, Dr., 51503 Rösrath (DE)
(74) Vertreter: Sparing Röhl Henseler Patentanwälte European Patent Attorneys

(57) **Zusammenfassung**

Verfahren zum Erfassen von Parametern der Erdatmosphäre mit mindestens einer Messsensoren aufweisenden Sonde (1) in einem von einem Wetterradar (2) überwachten Atmosphärenvolumen, bei dem die von den Messsensoren gemessenen Daten per Funk an eine Station (3) gesendet werden und die Position der Sonde (1) bestimmt wird, wobei die Zeit und die Position der Sonde (1), zu bzw. bei der eine jede Messung der Daten durchgeführt wird, den gemessenen Daten zugeordnet werden, und die von dem Wetterradar (2) erfassten Daten des überwachten Atmosphärenvolumens mit den von den Messsensoren gemessenen Daten mit Vergleich der den gemessenen Daten zugeordneten Zeiten und den entsprechenden Daten des Wetterradars (2) zu diesen Zeiten sowohl zeitlich als auch mit Vergleich der den gemessenen Daten zugeordneten Positionen und den entsprechenden Daten des Wetterradars (2) der Positionen örtlich korreliert werden.

## Beschreibung

Die Erfindung betrifft ein Verfahren und eine Vorrichtung zum Erfassen von Parametern der Erdatmosphäre nach dem Oberbegriff des Anspruchs 1 bzw. 20.

Radiosonden-Aufstiege sind ein unverzichtbares Mittel jedes Wetterdienstes zur Sammlung von Daten zur aktuellen Wettersituation. Bei einem Radiosonden-Aufstieg wird eine Sonde mit Messsensoren an einen mit Helium oder Wasserstoff gefüllten (Wetter-)Ballon gehängt, der die Sonde dann solange durch die Atmosphäre aufwärts bis in große Höhen von bis zu ungefähr 40 km über NN (Stratosphäre) trägt, bis er aufgrund der zu hohen Differenz zwischen Innen- und Aussendruck platzt. Die während des Aufstieges und Falles aufgenommenen bzw. gemessenen Daten werden zu einem Empfänger am Boden gefunkt.

Die Messsensoren der Sonde messen während des Aufstieges mindestens die Temperatur und die Luftfeuchtigkeit. Weitere Werte können der Luftdruck, die Radioaktivität, Gas-, Dampf- oder Aerosolkonzentrationen oder auch strahlungsbezogene Daten sein, die mit entsprechenden Messsensoren erfasst werden.

Um die mit den Messsensoren erfassten Daten mit der Höhe korrelieren zu können, muss die Position der Sonde bestimmt werden. Die Veränderung der Position ermöglicht die Messung der Windgeschwindigkeit und -richtung in der jeweiligen Höhe.

Moderne Sonden weisen für die Positionsermittlung einen Empfänger für ein Satelliten-gestütztes (GPS, Galileo, GLONASS) oder ein Bodenstation-gestütztes (LORAN) Navigationssystem auf. Eine Verfolgung der Sonde mit Hilfe von Radiotheodoliten ist ebenso möglich wie eine Verfolgung mittels aktiven (d.h. Radiosonde mit Transponder) oder passiven (d.h. Sonde mit Radarreflektor) Verfolgungsradarsystemen (Tracking Radar). Die Bestimmung der Höhe kann auch über die Luftdruckmessung durch die Sonde vorgenommen werden, indem einem gemessenen Luftdruck eine Höhe unter Annahme eines Luftdruck-Höhen-Modells zugeordnet wird.

Ferner ist ein Radarsystem vom Bureau of Meteorology der australischen Regierung bekannt, bei dem bei einem Radarsystem vom Wetterradar-Modus auf den Verfolgungsradar-Modus umgeschaltet werden kann, um entweder das umgebende atmosphärische Volumen meteorologisch vermessen oder eine Sonde verfolgen zu können.

Die durch ein Wetterradar erfassten Daten, d.h. insbesondere die Amplitude des gemessenen Echosignals, des überwachten Atmosphärenvolumens können verschiedenen Stellen zugeführt werden. Beispielsweise können diese Daten im Internet zur Verfolgung von Regenfeldern verwendet werden. Eine andere wichtige Verwendung stellt die Integration dieser Daten in numerische Vorhersagemodelle, z.B. für die Wettervorhersage oder für die Vorhersage von Wasserständen dar. Dabei hängt die Genauigkeit der Vorhersage extrem von der Genauigkeit der Wetterradardaten ab.

Die Genauigkeit von Wetterradardaten ist aufgrund des Messprinzips stark schwankend, z.B. in Abhängigkeit von der Entfernung oder der Niederschlagsdämpfung. Sie basiert auf a-priori Annahmen, z.B. in Bezug auf die lokale Tropfengrößeverteilung über die Koeffizienten der Z/R-Beziehung.

Nachteilig ist demnach, dass keine einfache Möglichkeit bekannt ist, die von einem Wetteradar erfassten Daten mit entsprechender Auswertung automatisch zu verifizieren, bzw. die in die Auswertung eingehenden Annahmen entsprechend den realen Gegebenheiten in dem durch das Wetterradar überwachten Atmosphärenvolumen zu ändern.

Aufgabe der Erfindung ist es daher, ein Verfahren nach dem Oberbegriff des Anspruchs 1 bzw. eine Vorrichtung nach dem Oberbegriff des Anspruchs 20 zu schaffen, bei dem bzw. der die in die Auswertung von einem Wetterradar erfassten Daten eines überwachten Atmosphärenvolumens zumindest lokal verifiziert bzw. optimiert werden.

Diese Aufgabe wird durch die Merkmale des Anspruchs 1 bzw. 20 gelöst.

Hierdurch wird ein Verfahren zum Erfassen von Parametern der Erdatmosphäre geschaffen, bei dem mindestens eine Messsensoren aufweisende Sonde in einem von einem Wetterradar überwachten Atmosphärenvolumen verwendet wird. Mit den Messsensoren werden die Werte von interessierenden Parametern der mindestens einen Sonde gemessen bzw. ermittelt und die Daten per Funk an eine Station gesendet. Die Position der Sonde ebenso wie die Zeit, zu der eine jede Messung der Daten durchgeführt wird, wird den gemessenen Daten zugeordnet.

Die von dem Wetterradar erfassten Daten des überwachten Atmosphärenvolumens werden mit den von den Messsensoren gemessenen Daten der mindestens einen Sonde mit Vergleich der den gemessenen Daten zugeordneten Zeiten und den entsprechenden Daten des Wetterradars zu diesen Zeiten sowohl zeitlich als auch mit Vergleich der den gemessenen Daten zugeordneten Positionen und den entsprechenden Daten des Wetterradars der Positionen örtlich korreliert.

Vorzugsweise werden die von den Messsensoren gemessenen Daten und die von dem Wetterradar erfassten Daten in Echtzeit korreliert, damit die Erfassung der vom Wetterradar erfassten Daten unmittelbar verifiziert bzw. optimiert werden kann. Für den Fall einer Echtzeitkorrelation erübrigt sich die Zuordnung der Zeit zu den von der Messsensoren einer Sonde ermittelten Daten.

Vorzugsweise wird die Position der Sonde durch eine in der Sonde angeordnete Einrichtung bestimmt, damit die Ortsbestimmung der Sonde zum Zeitpunkt der Messung der Daten durch die Sonde vorliegt und ein autarkes System mit der Sonde geschaffen wird, das von äußeren Einrichtungen unabhängig relevante und für das Verfahren notwendige Daten ermitteln kann. Die Positionsbestimmung erfolgt unabhängig vom Wetterradar.

Es kann auch vorgesehen sein, dass die Position der Sonde bei einem Scan des überwachten Atmosphärenvolumens durch das Wetterradar bestimmt wird, um die Sonde einfacher auszugestalten und zeitgleich zur Erfassung der Daten durch das Wetterradar die Position der Sonde zu ermitteln. Es ist möglich, dass die Positionsbestimmung durch eine Einrichtung in der Sonde, d.h. die Sonde selbst, durchgeführt und mit der durch das Wetterradar bestimmten Position verglichen wird. Bei einer Bestimmung der Position der Sonde durch das Wetterradar wird die Korrelation der von der Sonde bzw. den Messsensoren der Sonde ermittelten Daten und der durch das Wetterradar ermittelten Daten qualitativ verbessert in Bezug auf die Positionsdaten der Sonde selbst und der durch das Wetterradar bestimmten Position. Dabei kann zum einen verifiziert werden, wie genau die Positionsbestimmung des Wetterradars ist, und zum anderen können Angaben über die Position der Sonde innerhalb des vom Wetterradars erfassten Atmosphärenvolumens gemacht werden. Vorzugsweise wird bei der Erfassung der Position der Sonde durch das Wetterradar ein Rückstreuecho als einfaches Verfahren zur Ortsbestimmung der Sonde verwendet, wobei weiter bevorzugt die Sonde mit einem Radarreflektor ausgestattet wird, um die Ortsbestimmung der Sonde zu verbessern. Der Radarreflektor hat vorzugsweise einen bekannten Rückstreuquerschnitt, so dass aus der Amplitude des vom Wetterradars empfangenen rückgestreuten Signals, der vom Wetterradar gemessenen und von der Sonde übermittelten Entfernung und dem bekannten Wetterradar-Antennenprofil Rückschlüsse auf die Position der Sonde innerhalb des vom Wetterradar erfassten Atmosphärenvolumens gezogen werden können.

Vorzugsweise kann für eine Verbesserung der Ortsbestimmung der Sonde ein durch das Wetterradar aktivierbarer an der Sonde angeordneter Transponder verwendet werden. Mit diesem Transponder sind unterschiedliche Sonden in dem zu überwachenden Atmosphärenvolumen auf einfachem Wege eindeutig identifizierbar, und die Erfassung der Daten erfolgt unter Verwendung der Kennungen der einzelnen Sonden. Weiterhin kann der Transponder das Signal-Rauschverhältnis bei der Entfernungsmessung verbessern, so dass die Sondenposition auch in größeren Entfernungen vom Wetterradar gemessen werden kann. Dabei empfängt der Transponder das Wetterradarsignal und antwortet auf gleicher oder bekannter Frequenz mit höherer Leistung als ein passiver Reflektor. Es kann also ein Sekundärradar-Prinzip verwendet werden, welches auch bei der Positionsbestimmung mit separatem Radar und Transponder angewendet wird.

Das Transpondersignal kann auch weitergehende Informationen enthalten. Beispielsweise kann die Phase des vom Transponder empfangenen Signals zurückgesendet werden. Beispielsweise kann das Transpondersignal auch Informationen über die Polarisation des vom Transponder empfangenen Signals enthalten.

Vorzugsweise kann auch vorgesehen sein, dass als Antenne des Wetterradars eine elektronisch gesteuerte Mehrstrahlantenne verwendet wird, bei der ein Strahl zur Verfolgung der Sonde und der andere Strahl zur Abtastung des Atmosphärenvolumens verwendet wird. Hierdurch ist es möglich, bei einem Scan des Wetterradars sowohl die Daten bei der Abtastung des Atmosphärenvolumens zur Bestimmung der meteorologischen Parameter als auch die Positionsbestimmung der Sonde gleichzeitig durchzuführen, um die Korrelation der Daten von Sonde und Wetterradar zeitlich besser auslösen zu können.

Vorzugsweise wird die Temperatur von den Messsensoren der Sonde bei unterschiedlichen Höhen gemessen und ein Höhenprofil der Temperatur erstellt, das zur Steigerung der Qualität einer polarimetrischen Klassifizierung von Hydrometeoren verwendet wird, um die von dem Wetterradar ermittelten Daten unter Berücksichtigung der Korrelation mit den Daten der Sonde optimieren zu können.

Vorzugsweise wird mindestens ein Messsensor verwendet, der eine in-situ-Messung der Niederschlagsart erlaubt, und zur Verifizierung der polarimetrischen Klassifizierung von Hydrometeoren verwendet wird, um die von dem Wetterradar ermittelten Daten optimieren zu können, unter Berücksichtigung der Daten des Wetterradars mit Daten der Sonde. Dieser Sensor kann beispielsweise eine Kamera sein, deren Bilder per Funk übertragen und am Boden weiter verarbeitet werden.

Vorzugsweise wird als Wetterradar ein Dopplerradar verwendet, mit dem die radiale Windgeschwindigkeit gemessen und ein Geschwindigkeitsprofil als Funktion der Höhe ermittelt wird. Die mit dem Wetterradar ermittelten Daten, d.h. die radiale Komponente, werden mit den gemessenen Daten mindestens eines Messsensors zum Messen der Windgeschwindigkeit korrelliert, um die von dem Wetterradar ermittelten Daten optimieren zu können.

Vorzugsweise werden für eine Optimierung der vom Wetterradar ermittelten Daten die getroffenen Annahmen hinsichtlich der Komponente des Windvektors validiert. Weiter bevorzugt werden eventuelle bei der Vertikalbewegung der Sonde verursachte Fehler bei der Messung des Horizontalwindes bei der Sonde überprüft.

Vorzugsweise wird das Echo der Sonde (das Echo eines passiven Reflektors oder eines aktiven Transponders) zur Ermittlung der Signaldämpfung auf dem Pfad zwischen Wetterradar und Sonde verwendet und eine Verifizierung der Dämpfungsschätzungs-Algorithmen, beispielsweise bei polarimetrischer Abtastung, durchgeführt.

Vorzugsweise kann das Echo der Sonde zum Testen, Prüfen und/oder Kalibrieren der Radarstrahl-Positionsbestimmung verwendet werden, um die Genauigkeit der von dem Wetterradar ermittelten Daten zu erhöhen. Weiter bevorzugt wird das Echo der Sonde zur Reflektivitätskalibrierung des Wetterradars verwendet, wobei weiter bevorzugt ist, dass das Echo der Sonde zur Vermessung des Strahlprofils der Antenne des Wetterradars verwendet wird. Die Positionskalibrierung mit der Sonde ermöglicht nicht nur eine Kalibrierung von Azimuth und Elevation, sondern auch von der Entfernungsmessung. Bislang geht dies nur mit dem sog. Sun Tracking Verfahren. Dabei wird die Radarantenne auf die Sonne ausgerichtet und das Signal maximiert. Die mit nautischer Genauigkeit bekannte Position der Sonne ermöglicht dann eine Kalibrierung der Radarstrahl-Positionsbestimmung. Dafür muss jedoch der Scan unterbrochen werden. Das Sun Tracking Verfahren kann nur am Tage durchgeführt werden und gestattet keine Entfernungskalibrierung.

Vorzugsweise wird als Sonde eine von einem Flugzeug bzw. Flugkörper abgeworfene Sonde verwendet, so dass Sonden unabhängig von Wetterballons bei großen Höhen verwendet werden können.

Vorzugsweise wird als Bodenstation das Wetterradar verwendet, um ein einfaches Verfahren ohne zusätzliche externe Auswertungseinheit außerhalb der Sonde und des Wetterradars vorliegen zu haben.

Weitere Ausgestaltungen der Erfindung sind den Unteransprüchen und der nachfolgenden Beschreibung zu entnehmen.

Die Erfindung wird nachstehend anhand des in den beigefügten Abbildungen dargestellten Ausführungsbeispiels näher erläutert.
Fig. 1 zeigt ein Wetterradar mit Sonden in einem vom Wetterradar überwachten Atmosphärenvolumen; und
Fig. 2 zeigt ein Ablaufdiagramm für ein Verfahren zum Erfassen von Parametern der Erdatmosphäre mit mindestens einer Messsensoren aufweisenden Sonde in einem von einem Wetterradar überwachten Atmosphärenvolumen.

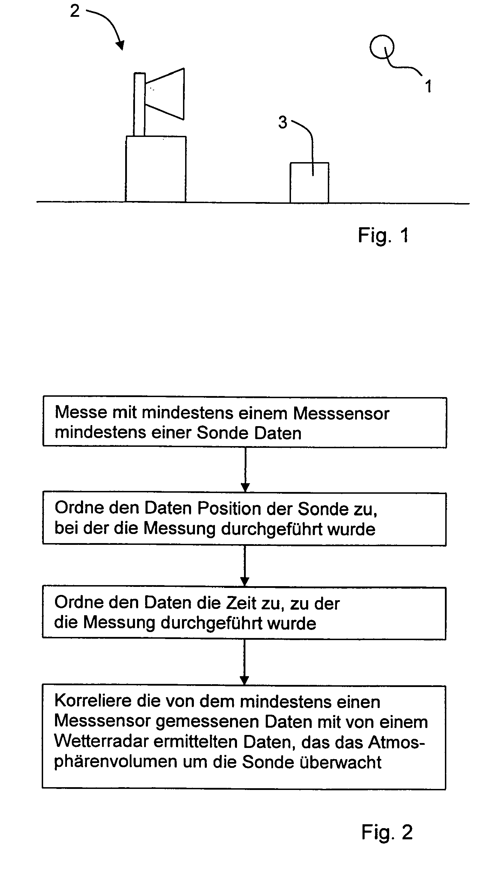

Fig. 1 zeigt schematisch eine Sonde 1 in einem von einem Wetterradar 2 erfassten Atmosphärenvolumen. Die Sonde 1 kann als Radiosonde, die an einen mit Helium oder Wasserstoff gefüllten (Wetter-)Ballon gehängt ist, ausgebildet sein. Die Sonde 1 weist Messsensoren auf, die während des Aufstieges mindestens die Temperatur und die Luftfeuchtigkeit messen. Es können ferner Messsensoren für den Luftdruck, die Radioaktivität, Gas-, Dampf- oder Aerosolkonzentrationen oder auch für strahlungsbezogene Parameter vorgesehen sein.

Die von der Sonde 1 über die Messsensoren gemessenen Werte werden über Funk an eine Station 3 gesendet, die vorzugsweise auch in dem Wetterradar 2 ausgebildet sein kann. Zusätzlich zu der Erfassung der interessierenden Werte mittels der Messsensoren der Sonde 1 wird die Position der Sonde 1 ermittelt.

Den von den Messsensoren ermittelten Daten bzw. Werten wird die Zeit und die Position zugeordnet, zu bzw. in der jede Messung der Daten bzw. eines Datensatzes bei nahezu gleichzeitig durchgeführten Messungen eines bzw. unterschiedlicher Messsensoren durchgeführt wurde bzw. wird.

Es wird ein Vergleich durchgeführt, derart, dass die von dem Wetterradar 2 erfassten Daten des überwachten Atmosphärenvolumens mit den von den Messsensoren gemessenen Daten zu gleichen Zeiten und an gleichen Orten verglichen werden. Die vom Wetterradar 2 ermittelten Daten eines Scans werden mit den von der Sonde 1 durchgeführten Messungen der Messsensoren zu nahezu gleicher Zeit, d.h. der Zeit, die in nächster Nähe zu dem Zeitpunkt des Scans liegt, verglichen, die am gleichen Ort durch die Messsensoren der Sonde 1 und das Wetterradar 2 ermittelt wurden bzw. werden. Es wird eine zeitliche und örtliche Korrelation der durch die Sonde 1 und das Wetterradar 2 ermittelten Daten durchgeführt.

Neben der in Fig. 1 dargestellten Möglichkeit, dass eine Sonde 1 in dem von dem Wetterradar 2 überwachten Atmosphärenvolumen verwendet wird, ist es möglich, mehrere Sonden 1 zu verwenden, um die Qualität der Korrelation weiter zu verbessern. Sofern mehrere Sonden 1 verwendet werden, können die Sonden 1 beabstandet zueinander in dem 3D-Raum, der sich aus einer nacheinanderfolgenden Abtastung der einzelnen vom Wetterradar 2 erfassten Atmosphärenvolumen ergibt, Daten über die Messsensoren ermitteln.

Zur Positionsbestimmung kann die Sonde 1 über eine eigenständige Technik verfügen. Wenn die Sonde 1 an einen (Wetter-)Ballon gehängt wird, können während des Auf- und Abstieges von der Sonde 1 Daten gemessen werden. Sofern eine eigenständige Technik der Positionsbestimmung in der Sonde 1 vorliegt, ist eine Erfassung der Sonde 1 durch das Wetterradar 2 nicht notwendig.

Zur Verbesserung der Qualität der Korrelation zwischen den Daten der Sonde 1 und des Wetterradars 2 kann die Position der Sonde 1 durch das Wetterradar 2 ermittelt werden. Die Erfassung geschieht dann während des normalen Volumenscans des Wetterradars 2. Sobald der Strahl des Wetterradars 2 die Sonde 1 erfasst, wird durch einen Radarreflektor an der Sonde 1 ein starkes Rückstreuecho erzeugt, welches eindeutig identifizierbar ist. Alternativ kann auch ein Transponder in der Sonde 1 aktiviert werden, der die Sonde 1 kennzeichnet. Im Falle einer mit einem Transponder ausgestatteten Sonde 1 kann der Transponder auf die Radarfrequenz antworten. Zudem ist es möglich, dass der Transponder auf einer umgesetzten Frequenz antwortet, die mit einem separaten Empfänger empfangen wird, um die Radarmessung nicht zu stören.

Es ist ebenfalls möglich, dass die Sonde 1 einen Dauerstrich-Sender trägt, der während des ganzen Aufstiegs - im Falle eines an einen (Wetter-)Ballon angehängten Sensors 1 - aktiv ist.

Zur Positionsbestimmung der Sonde 1 durch das Wetterradar 2 kann das Wetterradar 2 auch auf einen Tracking Mode umschalten, um die Sonde 1 zu verfolgen, und danach wieder in den Volumenscan zurückschalten. Die Erfassung der Sonde 1 erfolgt dabei dynamisch während der Volumenabtastung.

Es kann auch ein Wetterradar 2 verwendet werden, das mit elektronisch gesteuerter Mehrstrahlantenne (Phased Array) ausgestattet ist. Dann kann ein Strahl die Sonde 1 verfolgen, während ein zweiter Strahl das Atmosphärenvolumen abtastet.

Die Darstellung der Daten kann für einen Auf- und/oder Abstiegspfad der Sonde 1 zusammen mit den vom Wetterradar 2 ermittelten Daten in einem Datensystem erfolgen, wobei als Darstellung eine 2- oder 3-dimensionale Darstellung gewählt werden kann.

Die Qualität der polarimetrischen Klassifizierung von Hydrometeoren wird durch die Kenntnis des jeweiligen aktuellen Temperaturprofils (Temperatur als Funktion der Höhe) erheblich gesteigert, so dass mit der Sonde 1 das Temperaturprofil gemessen wird und die von dem Wetterradar 2 ermittelten Daten an das Temperaturprofil angepasst werden.

Ferner kann die Sonde 1 mit einem Sensor ausgestattet werden, der In-Situ Bestimmungen der Niederschlagsart erlaubt. Damit kann die polarimetrische Klassifizierung von Hydrometeoren verifiziert werden.

Für die Auswertung kann es interessant sein, Windgeschwindigkeitsmessungen zu korrelieren, weshalb als Wetterradar 1 ein Dopplerradar verwendet werden kann. Ein Dopplerradar ist in der Lage, die radiale Windgeschwindigkeit zu messen. Durch bestimmte Verfahren, z.B. VAD kann ein Geschwindigkeitsprofil als Funktion der Höhe ermittelt werden. Diese Daten können mit den von der Sonde 1 gemessenen Daten korreliert werden. Für das Datensystem des Wetterradars 2 können so die Annahmen zu der fehlenden Komponente des Windvektors validiert werden. Umgekehrt kann die Korrektur der durch die Vertikalbewegung der Sonde 1 verursachten Fehler bei der Messung des Horizontalwindes im Datensystem der Sonde 1 überprüft werden. Bisher sind für solche Prüfungen und Korrekturen numerische Modelle, wie z.B. GRAPES 3D-VAR, notwendig.

Das Echo der Sonde 1 oder eines an der Sonde 1 angeordneten Transponders kann bei Berücksichtigung des Strahlprofils der Antenne des Wetterradars 2 ferner verwendet werden, um die Reflektivitätskalibrierung des Wetterradars 2 zu prüfen.

Das Strahlprofil der Antenne selbst kann durch Verwendung des Echos der Sonde 1 oder des Transponders vermessen werden.

Ein Transponder oder ein Reflektor der Sonde 1 kann ein polarimetrisch isotropes Signal oder ein Signal mit bekannter polarimetrischer Drehung aussenden bzw. reflektieren. Mit beiden Methoden kann die ZDR- und die LDR-Kalibrierung des Radars überprüft werden.

Das Transponder- oder Reflektorsignal kann verwendet werden, um die Signaldämpfung auf dem Pfad zwischen Wetterradar 2 und Sonde 1 zu ermitteln, was eine Verifizierung der Dämpfungsschätzungs-Algorithmen bei polarimetrischer Abtastung ermöglicht.

Als Sonde 1 lassen sich auch so genannte Dropsondes verwenden, die von Flugzeugen abgeworfen werden.

Fig. 2 zeigt schematisch ein Ablaufdiagramm zur Durchführung des Verfahrens.

## Patentansprüche

1. Verfahren zum Erfassen von Parametern der Erdatmosphäre mit mindestens einer Messsensoren aufweisenden Sonde (1) in einem von einem Wetterradar (2) überwachten Atmosphärenvolumen, bei dem die von den Messsensoren gemessenen Daten per Funk an eine Station (3) gesendet werden und die Position der Sonde (1) bestimmt wird, **dadurch gekennzeichnet, dass** die Zeit und die Position der Sonde (1), zu bzw. bei der eine jede Messung der Daten durchgeführt wird, den gemessenen Daten zugeordnet werden, und dass die von dem Wetterradar (2) erfassten Daten des überwachten Atmosphärenvolumens mit den von den Messsensoren gemessenen Daten mit Vergleich der den gemessenen Daten zugeordneten Zeiten und den entsprechenden Daten des Wetterradars (2) zu diesen Zeiten sowohl zeitlich als auch mit Vergleich der den gemessenen Daten zugeordneten Positionen und den entsprechenden Daten des Wetterradars (2) der Positionen örtlich korreliert werden.

2. Verfahren zum Erfassen von Parametern der Erdatmosphäre nach Anspruch 1, **dadurch gekennzeichnet, dass** die von den Messsensoren gemessenen Daten und die von dem Wetterradar (2) erfassten Daten in Echtzeit korreliert werden.

3. Verfahren zum Erfassen von Parametern der Erdatmosphäre nach Anspruch 1 oder 2, **dadurch gekennzeichnet, dass** die Position der Sonde (1) durch eine in der Sonde (1) vorgesehene Einrichtung bestimmt wird.

4. Verfahren zum Erfassen von Parametern der Erdatmosphäre nach einem der Ansprüche 1 bis 3, **dadurch gekennzeichnet, dass** die Position der Sonde (1) bei einem Scan des überwachten Atmosphärenvolumens durch das Wetterradar (2) bestimmt wird.

5. Verfahren zum Erfassen von Parametern der Erdatmosphäre nach Anspruch 4, **dadurch gekennzeichnet, dass** zur Positionsbestimmung der Sonde (1) durch das Wetterradar (2) ein Rückstreuecho verwendet wird.

6. Verfahren zum Erfassen von Parametern der Erdatmosphäre nach Anspruch 5, **dadurch gekennzeichnet, dass** die Sonde (1) mit einem Radarreflektor ausgestattet wird.

7. Verfahren zum Erfassen von Parametern der Erdatmosphäre nach Anspruch 4, **dadurch gekennzeichnet, dass** zur Positionsbestimmung der Sonde (1) durch das Wetterradar (2) eine Aktivierung eines an der Sonde (1) vorgesehenen Transponders verwendet wird.

8. Verfahren zum Erfassen von Parametern der Erdatmosphäre nach einem der Ansprüche 4 bis 7, **dadurch gekennzeichnet, dass** als Antenne des Wetterradars (2) eine elektronisch gesteuerte Mehrstrahlantenne verwendet wird, bei der ein Strahl zur Verfolgung der Sonde (1) und der andere Strahl zur Abtastung des Atmosphärenvolumens verwendet wird.

9. Verfahren zum Erfassen von Parametern der Erdatmosphäre nach einem der Ansprüche 1 bis 8, **dadurch gekennzeichnet, dass** die Temperatur von den Messsensoren bei unterschiedlichen Höhen gemessen und ein Höhenprofil der Temperatur erstellt wird, das zur Steigerung der Qualität einer polarimetrischen Klassifizierung von Hydrometeoren verwendet wird.

10. Verfahren zum Erfassen von Parametern der Erdatmosphäre nach einem der Ansprüche 1 bis 9, **dadurch gekennzeichnet, dass** als mindestens ein Messsensor der Messsensoren einer verwendet wird, der eine in-situ-Messung der Niederschlagsart erlaubt, und zur Verifizierung der polarimetrischen Klassifizierung von Hydrometeoren verwendet wird.

11. Verfahren zum Erfassen von Parametern der Erdatmosphäre nach einem der Ansprüche 1 bis 10, **dadurch gekennzeichnet, dass** als Wetterradar (2) ein Dopplerradar verwendet wird, mit dem die radiale Windgeschwindigkeit gemessen wird und ein Geschwindigkeitsprofil als Funktion der Höhe ermittelt wird, und die mit dem Wetterradar (2) ermittelten Daten mit den gemessenen Daten mindestens eines Messsensors zum Messen der Windgeschwindigkeit korrelliert werden.

12. Verfahren zum Erfassen von Parametern der Erdatmosphäre nach Anspruch 11, **dadurch gekennzeichnet, dass** die bei der Ermittlung der Daten durch das Wetterradar (2) getroffenen Annahmen hinsichtlich der Komponente des Windvektors validiert werden.

13. Verfahren zum Erfassen von Parametern der Erdatmosphäre nach Anspruch 11, **dadurch gekennzeichnet, dass** eventuelle bei der Vertikalbewegung der Sonde (1) verursachte Fehler bei der Messung des Horizontalwindes bei der Sonde (1) überprüft werden.

14. Verfahren zum Erfassen von Parametern der Erdatmosphäre nach einem der Ansprüche 4 bis 13, **dadurch gekennzeichnet, dass** das Echo der Sonde (1) zur Ermittlung der Signaldämpfung auf dem Pfad zwischen Wetterradar (2) und Sonde (1) verwendet wird und eine Verifizierung der Dämpfungsschätzungs-Algorithmen durchgeführt wird.

15. Verfahren zum Erfassen von Parametern der Erdatmosphäre nach einem der Ansprüche 1 bis 14, **dadurch gekennzeichnet, dass** das Echo der Sonde (1) zum Testen, Prüfen und/oder Kalibrieren der Radarstrahl-Positionsbestimmung verwendet wird.

16. Verfahren zum Erfassen von Parametern der Erdatmosphäre nach einem der Ansprüche 4 bis 15, **dadurch gekennzeichnet, dass** das Echo der Sonde (1) zur Reflektivitätskalibrierung des Wetterradars (2) verwendet wird.

17. Verfahren zum Erfassen von Parametern der Erdatmosphäre nach einem der Ansprüche 4 bis 16, **dadurch gekennzeichnet, dass** das Echo der Sonde (1) zur Vermessung des Strahlprofils der Antenne des Wetterradars (2) verwendet wird.

18. Verfahren zum Erfassen von Parametern der Erdatmosphäre nach einem der Ansprüche 1 bis 17, **dadurch gekennzeichnet, dass** als Sonde (1) eine von einem Flugzeug abgeworfene Sonde (1) verwendet wird.

19. Verfahren zum Erfassen von Parametern der Erdatmosphäre nach einem der Ansprüche 1 bis 18, **dadurch gekennzeichnet, dass** als Station (3) das Wetterradar (2) verwendet wird.

20. Vorrichtung zur Erfassung von Parametern der Erdatmosphäre mit einem Computersystem, mit dem Daten von einer Messsensoren aufweisenden Sonde (1), die sich in einem von einem Wetterradar (2) überwachten Atmosphärenvolumen befindet, per Funk empfangbar sind, und die Position der Sonde (1) bestimmbar ist, **dadurch gekennzeichnet, dass** das Computersystem ausgestaltet ist, die Zeit und die Position der Sonde (1), bei der eine jede Messung der Daten durchgeführt wird, den gemessenen Daten zuzuordnen, und die von dem Wetterradar (2) erfassten Daten des überwachten Atmosphärenvolumens mit den von den Messsensoren gemessenen Daten mit Vergleich der den gemessenen Daten zugeordneten Zeiten und den entsprechenden Daten des Wetterradars (2) zu diesen Zeiten sowohl zeitlich als auch mit Vergleich der den gemessenen Daten zugeordneten Positionen und den entsprechenden Daten des Wetterradars (2) der Positionen örtlich korrelierbar sind, und das Computersystem über einen Ausgang mit einer die Daten des Wetterradars (2) auswertenden Auswerteeinheit verbunden ist und die zur Auswertung der Daten im Speicher der Auswerteeinheit vorhandenen Werte in Abhängigkeit von den mit den Messsensoren gemessenen Daten über den Ausgang vom Computersystem veränderbar sind.
